# EUROPEAN PATENT APPLICATION

(11) **EP 0 619 077 A1**
(43) Date of publication of application: **12.10.1994**
(21) Application number: 94200950.7
(22) Date of filing: 07.04.1994
(51) Int. Cl.: A23J 3/06, A23P 1/12, A22C 13/00

(54) **Method and device for covering a food product**

(30) Priority: 07.04.1993 EP 93201037
(71) Applicant: STORK PROTECON-LANGEN B.V., NL-5349 AE Oss (NL)
(72) Inventor: Van Doorne, Henricus Wilhelmes, NL-5831 RW Boxmeer (NL); Van Esbroeck, Maurice Eduardus Theodorus, NL-6681 AR Bemmel (NL)
(74) Representative: Van Someren, Petronella F. H. M.

(57) **Abstract**

The invention relates to a method for covering a food product by arranging around the food product by means of extrusion a collagen-containing mass which contains a maximum of 92% water.

The collagen-containing mass is preferably a paste of collagen treated with acid.

The collagen-containing mass e.g. consists of pieces of animal collagen-containing tissue, such as animal dermis.

The invention further relates to a device for performing the method, comprising means for supplying the food product, means for placing the collagen-containing mass under a pressure of at least 10 bar and means for shaping the collagen-containing mass.

## Description

The present invention relates to a method and device for covering a food product.

In order to prevent spoiling and dehydration particular foodstuffs such as sausage and the like are covered with a thin casing.

In the past natural intestine was used as casing. Used nowadays however is synthetic casing which is filled with meat paste. A method for manufacturing synthetic casing is for instance described in the German patent specification 650.526.

Alternatively, it is possible to extrude the meat paste and simultaneously to arrange a skin of a thin collagen paste therearound by means of extrusion. The thus formed sausage is immediately carried through a brining bath for strengthening and later treated with a primary aldehyde, for instance in the form of fluid smoke, to cross link the collagen fibres in the skin. In this manner a strong casing is obtained.

It is important that the collagen skin has a uniform appearance without bulges or holes. The paste is therefore guided immediately prior to extrusion through a gap-like opening between two conical cylinders rotating in opposing directions. Irregularities in the paste are hereby as it were ironed out and the uniformity of the casing ensured. The skin must moreover be very plastic to prevent deformation of the soft meat paste.

The collagen paste consists of collagen treated with acid and has a water content of about 96%. A drawback to this comparatively large amount of water is that the paste takes up a lot of space during transport and is susceptible to spoiling. In addition a relatively large number of finishing treatments are necessary to harden the skin.

The object of the present invention is to provide a method and device for covering food products wherein the said drawbacks are obviated.

This is achieved by the invention by arranging round the food product by means of extrusion a collagen-containing mass which contains a maximum of 92% water.

From the German patent specification 659.490 it is known to manufacture a synthetic casing of skin components by means of a circular nozzle. During extrusion air is blown in the thus formed hose to dry and cure the casing. The water content of the fiber paste used in this process is at least 75%. Contrary to the present invention this casing produced is formed separately from the food product and is filled with meat paste later on. In this sequence of steps the fibre paste has to comply only to the requirements of the casing itself. In the process of the invention however also other requirements have to be met. The meat paste which is very soft and vulnerable may not be damaged during the application of the casing. It has always been thought that therefore collagen-containing masses with a very high water content should inevitably be used because these are softer and will therefore not damage the meat paste. The present invention however goes against this prejudice by using a collagen-containing mass having a much lower water content than the masses used up till now.

Preferably the water content is at most 90% but it has now been found that even water contents as low as 30, 20 or even 10% may be used to obtain a satisfactory result.

It is very surprising that good results are achieved with the use of a collagen-containing mass with a low water content, because even with a thin collagen paste it is already difficult to obtain a uniform distribution round the meat strand. A thicker mass would on the contrary be expected to provide more problems of uniformity.

In principle the collagen-containing mass may have a water content of as low as 10% as long as the mass is somewhat liquid. In preference the collagen-containing mass has a minimal water content of 20%, preferably at least 30%, more prefarbly at least 40%. In preference every water content under 92%, preferably under 90, more preferably under 85%, for example 50-85%, more preferably 60-80% and most preferably 60-75% or 60-70% of water may be used.

The best results are obtained when the collagen-containing mass is extruded under a pressure of at least 10 bar. In preference the applied pressure is at least 20 bar and more preferably at least 100 bar.

Collagen-containing masses comprising such low water contents may be prepared in a variety of ways. It is possible to use relatively dry collagen fibres as described in PCT application WO92/10944 and add the desired amount of water. Such collagen-containing masses have a rather fibrous consistency. The collagen-containing mass can for instance also be a paste of collagen treated with acid. The collagen acquires its paste-like form due to the acid treatment. In another embodiment of the invention the collagen-containing mass can consist of pieces of animal dermis, such as dermis of cows or pigs. During processing of pieces of dermis the mass is preferably first mixed. Pieces of dermis are slightly alkaline and contain 60-65% water. In order to neutralize the alkaline character of the dermis a small quantity of acid, having e.g. a pH of about 3 to 4 is added. The water content lies between 70-75% after the acid treatment. The thus obtained mass is essentially non-fibrous and may be dried to the desired water content.

The invention further relates to a device for performing the method. In the devices traditionally used for sausage making the extruded and covered meat product is at one stage of the process passed through a helical drying device. These drying devices are very complicated and expensive. The drying of the collagen casing in such a drying device is however essential for obtaining a product of the desired quality. The present invention has the additional advantage that such helical drying device may be omitted thus rendering the sausage making process more cost-effective. The device according to the invention thus comprises a linear dryer instead of a helical dryer or any less complicated dryer desired.

Parts of the device of the invention are in itself known and for example described in Canadian patent application 888120. The device thus comprises means for supplying the food product, means for placing the collagen-containing mass under pressure, means for shaping the collagen-containing mass, and means for drying the product. The means for placing the collagen-containing mass under pressure usually supply roughly 5 to 8 bar.

In one embodiment of the invention meat paste for instance is extruded via a tube, wherein the collagen-containing mass is simultaneously shaped and arranged under very high pressure, preferably at least 100 bar and more preferably at least 1000 bar. In the case of a sausage machine the means for shaping the collagen-containing mass will be formed by an annular extrusion nozzle.

The mass can be placed under a very high pressure in different ways. The pressure can for example be increased by means of an extrusion screw. A part of such an extrusion screw can likewise be used for mixing the mass. This mixing is particularly important when pieces of dermis are used.

In an alternative case the pressure can be increased by means of a pump. In this case the mass can be treated for instance by means of a static mixer.

A very small amount of liquid such as water can optionally be added to the mass. Possible additives such as seasonings and the like can be included in this water. The amount of added liquid must however never be such that the upper limit of the water content of the mass is exceeded.

Extrusion machines for manufacturing sausages and the like are known per se. To perform the method according to the invention they can however be provided with means for placing the collagen-containing mass under a very high pressure.

The present invention provides a method and device with which a covering layer can be arranged round food products, wherein the collagen-containing mass forming the covering layer has a lower water content than the conventionally applied collagen pastes. The drawbacks of a high water content are thus prevented and, surprisingly, it has been found possible to form a uniform casing.

## Claims

1. Method for covering a food product by arranging directly around the food product by means of extrusion a collagen-containing mass which contains a maximum of 92% water.

2. Method as claimed in claim 1, **characterized in that** the collagen-containing mass contains a maximum of 90% water.

3. Method as claimed in claim 1 or 2, **characterized in that** the collagen-containing mass contains a maximum of 75% water.

4. Method as claimed in claim 1, 2 or 3, **characterized in that** the collagen-containing mass contains at least 10% water.

5. Method as claimed in any one of the claims 1-4, **characterized in that** the collagen-containing mass contains at least 20% water.

6. Method as claimed in any one of the claims 1-5, **characterized in that** the collagen-containing mass contains at least 30% water.

7. Method as claimed in any one of the claims 1-6, **characterized in that** the collagen-containing mass contains 10-60% water.

8. Method as claimed in claim 1, **characterized in that** the collagen-containing mass contains between 40 and 90% water.

9. Method as claimed in claim 1, **characterized in that** the collagen-containing mass contains between 50 and 85% water.

10. Method as claimed in claims 1, **characterized in that** the collagen-containing mass contains between 60 and 80% water.

11. Method as claimed in claims 1, **characterized in that** the collagen-containing mass contains between 60 and 75% water.

12. Method as claimed in claims 1, **characterized in that** the collagen-containing mass contains between 60 and 70% water.

13. Method as claimed in claims 1-12, **characterized in that** the collagen-containing mass is a paste of collagen treated with acid.

14. Method as claimed in claims 1-13, **characterized in that** the collagen-containing mass consists of pieces of animal collagen-containing tissue.

15. Method as claimed in claims 1-14, **characterized in that** the collagen-containing mass consists of pieces of animal dermis.

16. Method as claimed in claim 14 or 15, **characterized in that** the dermis is pre-treated with acid.

17. Method as claimed in claims 1-16, **characterized in that** the collagen-containing mass is extruded under a pressure of at least 10 bar.

18. Method as claimed in claim 17, **characterized in that** the collagen-containing mass is extruded under a pressure of at least 20 bar.

19. Method as claimed in claim 17, **characterized in that** the collagen-containing mass is extruded under a pressure of at least 100 bar.

20. Device for performing the method as claimed in any of the claims 1-19.

21. Device as claimed in claim 20, **characterized by** means for supplying a food product, means for supplying a collagen-containing mass, means for placing the collagen-containing mass under a pressure of at least 10 bar, a central extrusion nozzle for extruding the food product, a peripheral nozzle for extruding the collagen-containing mass around the extruded food product, a frame and means for drying the thus obtained food product.

22. Device as claimed in claim 21, **characterized by** means for placing the collagen-containing mass under a pressure of at least 20 bar.

23. Device as claimed in claim 22, **characterized** by means for placing the collagen-containing mass under a pressure of at least 100 bar.

24. Device as claimed in any of the claims 20-23, further comprising means for mixing the collagen-containing mass.

25. Device as claimed in any of the claims 20-24, further comprising means for supplying to the mass water in which additives are optionally included.

26. Device as claimed in any of the claims 20-25, **characterized in that** the means for shaping the collagen-containing mass are formed by an annular extrusion nozzle.

27. Device as claimed in any of the claims 20-26, **characterized in that** the means for placing under pressure and mixing the collagen-containing mass are formed by an extrusion screw.

28. Device as claimed in any of the claims 20-26, **characterized in that** the means for placing the mass under pressure are formed by a pump.

29. Device as claimed in any of the claims 20-28, **characterized in that** the mixing means are formed by a static mixer.

30. Device as claimed in any one of the claims 20-29, **characterized in that** the drying means are formed by a linear dryer.
